# EUROPEAN PATENT SPECIFICATION

(11) **EP 3 941 827 B1**
(45) Date of publication and mention of the grant of the patent: **06.05.2026**
(21) Application number: 20716973.1
(22) Date of filing: 18.03.2020
(51) Int. Cl.: B64C 27/50

(54) **ROTOR BLADES OF A LIFT ROTOR**
ROTORBLÄTTER EINES HUBROTORS
PALES DE ROTOR D'UN ROTOR SUSTENTATEUR

(30) Priority: 18.03.2019 NL 1043196
(43) Date of publication of application: 26.01.2022
(73) Proprietor: PAL-V IP B.V., 4941 TB Raamsdonksveer (NL)
(72) Inventor: WEGERIF, Robert Christiaan, 7325 NL Apeldoorn (NL); SOETHOUDT, Wouter Adriaan, 2517 TJ Den Haag (NL); VAN RIJN, Louis Petrus Valentjin Marie, 2651 VH Berkel en Rodenrijs (NL); STEKELENBURG, Michael Alwin William, 5263 BS Vught (NL)
(74) Representative: Patentwerk B.V.
(86) International application number: PCT/NL2020/000005
(87) International publication number: WO 2020/190126

(56) References cited:
- WO-A2-2014/024128
- US-A- 3 321 021
- US-A- 3 750 982
- US-A- 3 771 923
- US-A- 5 915 649
- US-B1- 6 260 798
- US-B2- 9 566 839

## Description

### FIELD OF THE INVENTION

The present invention relates in general to rotor blades of a lift rotor. In the context of the present invention, a "lift rotor" is a rotor providing lift force to a flying vehicle, such as for instance a helicopter, or a gyrocopter. The invention relates particularly to the field of convertible vehicles that have a flying condition and a road traffic condition.

### BACKGROUND OF THE INVENTION

Generally, the length of a rotor blade is much longer than the width or length of the vehicle concerned. Such length translates to an amount of floor space occupied by the vehicle when standing still. In certain circumstances, it is desirable to reduce that space, for instance when being parked in a shelter or when being transported in a truck or airplane.

For rotors having two blades, it is possible to reduce the width of the overall vehicle by aligning the rotor blades with the longitudinal direction of the vehicle. If that does not suffice, it is known to remove the rotor blades, which does however require hoisting equipment and/or the need for personnel to climb on top of the vehicle. An example of a vehicle with lift rotor can be found in document US 9566839 B2.

### SUMMARY OF THE INVENTION

Solutions such as described above are not suitable for convertible vehicles. By the very nature of such vehicles, it is essential that they can be converted from a flying condition to a road traffic condition in a relatively simple and quick manner, by a single person remaining standing on the floor. Further, in the road traffic condition, it is not intended that the rotor blades are left behind, hence removing the blades is not a preferred solution.

Further, in the road traffic condition, merely positioning the rotor such that the rotor blades are aligned longitudinally in opposite direction is not a suitable solution. The vehicle as a whole should, in the road traffic condition, comply with road traffic regulations, have a low centre of gravity, have a low air resistance, etc.

Said requirements can, up to a point, be met if the rotor blades are hinged to a central rotor hub, and are with respect to this central hub hinged to a mutually parallel position, i.e. in the same direction parallel to the longitudinal direction of the vehicle.

Nevertheless, for performing in flying condition, a relatively large blade length is desirable, while the vehicle body is desirably compact so that large blades would, apart from being an aerodynamic problem, pose the problem of projecting beyond the vehicles contours. Therefore, the present invention proposes to have each rotor blade be foldable. The above objectives are obtained by a vehicle according to claim 1 and a method according to claim 11.

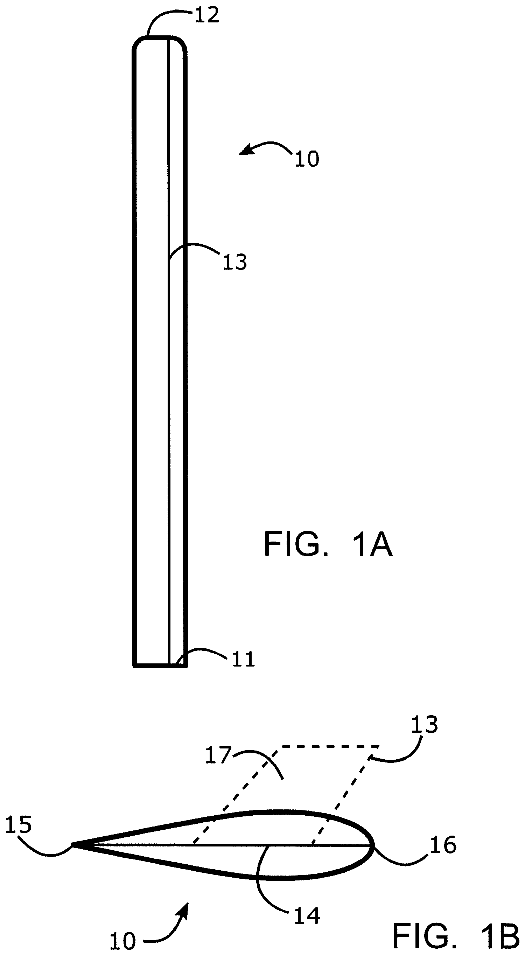

Figure 1A shows a schematic top view of a rotor blade 10. It can be seen that rotor blades are elongate with a relatively large length and a relative small width. The rotor blade 10 has a proximal end 11 adapted for connection to a rotor hub (not shown), and an opposite distal free end 12. A quarter chord line connecting the proximal end 11 and distal end 12 will be indicated as blade centre line 13, and its length determines the length of the rotor blade 10.

Figure 1B shows a schematic cross section of the rotor blade 10, in a plane perpendicular to the blade centre line 13. The blade has an aerodynamic wing profile, with a leading edge 16 and a trailing edge 15. A straight line connecting the leading edge 16 and trailing edge 15 will be indicated as chord 14. It can be seen that the length of the chord 14 is larger than the largest thickness of the blade 10, measured in a direction perpendicular to the chord 14 and to the blade centre line 13.

In the following, a virtual plane defined by the chord 14 and the blade centre line 13 will be indicated as a chord plane 17. It is noted that, in operation, the rotor blade 10 will be rotating around a substantially vertical rotation axis, with the chord plane 17 directed substantially horizontally.

According to an important aspect of the present invention, the rotor blade comprises, between its proximal end and distal free end, a hinge structure having a hinge axis substantially parallel to the chord plane 17, perpendicular to the blade centre line 13. Such hinge structure allows the rotor blade to be folded about an axis substantially parallel to chord 14.

In an operational position, the rotor blade 10 is positioned at a relatively large height above ground, if only to provide sufficient ground clearing. Chord 14 will be substantially horizontal. Folding the rotor blade while being in this operational position would require a hinging action in a vertical plane, which would be difficult if not impossible for a person standing on the ground. In a vehicle according to the present invention, a rotor hub is mounted at the top of a mast positioned above the vehicle. The lower end of the mast is hinged with respect to the vehicle, so that the mast can be lowered to a substantially horizontal position. The rotation axis of the rotor hub is fixed with respect to the mast, so that, with the mast in its lowered horizontal position, the rotation axis of the rotor hub is also directed horizontally. While the mast is being lowered, the two rotor blades are held parallel to the hinge axis. After the mast has been lowered, the two rotor blades still extend substantially horizontally, but now the chord plane 17 has rotated over about 90° to a substantially vertical orientation, so that the chord 14 is directed substantially vertically.

Folding the rotor blade about said axis parallel to chord 14 now involves hinging about a substantially vertical axis, i.e. a displacement in a horizontal plane, which can easily be accomplished by a single person.

When folding the rotor blade 10, it is desired that the two blade segments can be laid parallel to each other, i.e. a hinge angle of 180° should be achieved. It is possible to use a single-axis hinge, but in such case the hinge axis must be arranged outside the aerodynamic wing contour of the blade, which is not desirable since it increases aerodynamic drag. If the hinge would be located entirely within the aerodynamic wing contour of the blade, it is not possible to hinge over 180°.

To overcome these problems, the present invention proposes that the hinge structure has at least two hinge axes arranged in parallel.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
Figure 1A shows a schematic top view of a rotor blade;
Figure 1B shows a schematic cross section of a rotor blade;
Figure 2 is a perspective view of a convertible fly/drive vehicle according to the present invention in flying condition;
Figure 3 is a schematic side view showing the mast structure of the vehicle in a first intermediate condition between flying condition and road driving condition;
Figure 4 is a schematic side view showing the vehicle in a second intermediate condition between flying condition and road driving condition;
Figure 5 is a schematic top view of the vehicle in this second intermediate condition;
Figure 6 is a schematic top view of the vehicle in a third intermediate condition;
Figure 7 is a top view comparable to figure 6, showing the righthand rotor blade of the vehicle in road driving condition;
Figures 8A is a perspective view schematically illustrating main components of a hinge structure according to the present invention in taken apart condition;
Figure 8B is a perspective view shows a more realistic view of said components in assembled condition;
Figure 8C is a view comparable to figure 8B, with one blade segment attached to a blade connector;
Figure 9A is a schematic perspective view of the central hinge portion of one rotor blade;
Figure 9B is a view comparable to figure 9A, with one blade segment hinged up;
Figure 9C is a view comparable to figure 9A, with both blade segments hinged up;
Figure 10A illustrates two blade segments interfering with each other;
Figure 10B illustrates two blade segments such that one blade segment allows hinging of the other without interference according to the present invention;
Figures 11A-C schematically illustrate the operational principles of an embodiment of a preferential folding control arrangement according to the present invention.

### DETAILED DESCRIPTION OF THE INVENTION

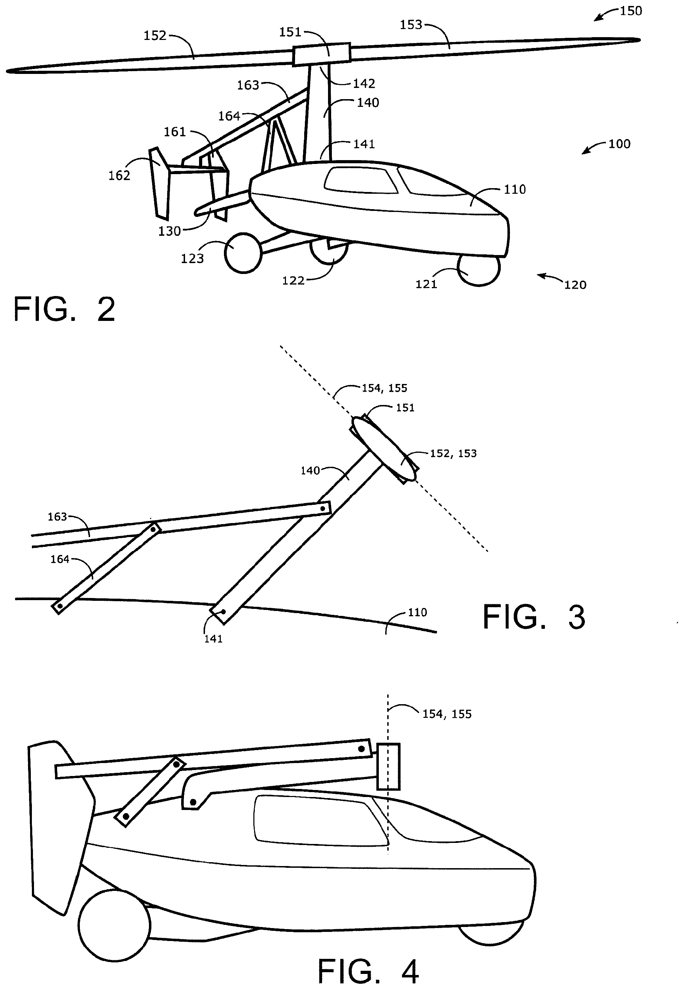

Figure 2 is a perspective view of a convertible fly/drive vehicle 100 according to the present invention. The vehicle 100 comprises a slender vehicle body 110, that contains an inner compartment for passengers, and that has a size comparable to the size of a car. The vehicle 100 has an undercarriage 120, comprising a front wheel 121 and two rear wheels 122, 123. At its rear end, the vehicle 100 comprises a propeller 130 for propulsion in fly mode, which propeller can be folded and accommodated within the vehicle body in drive mode.

The vehicle 100 accommodates an engine (not shown for sake of simplicity). In drive mode, the engine power is transferred to the rear wheels for propelling the vehicle as a normal car on a road. In fly mode, the engine power is transferred to the propeller 130 for providing propulsion in air.

The vehicle 100 has a mast 140, having its lower end 141 hinged to the top of the vehicle body 110, at a position close to the rear end of the vehicle body 110. At its top end 142, the mast 140 rotatably carries a lifting rotor 150 which, when rotating, provides a lifting force to the vehicle 100. While it is possible that the rotor 150 receives engine power for rotation, the rotor may also be of gyrocopter type. The rotor 150 comprises a rotor hub 151 and two rotor blades 152, 153.

The vehicle 100 further comprises an extendible tail structure 160, which includes two tail foils 161, 162 mounted to the distal end of an extendible tail boom 163. The tail boom 163 has its proximate end hinged to the mast 140, at a position close to the mast top end 142. At a position rearward from the mast 140, the tail structure 160 comprises a boom support 164, that has its lower end hinged to the vehicle body 110 and its upper end hinged to the tail boom 163.

Figure 2 shows the vehicle 100 in flying condition. The propeller 130 is deployed. The mast 140 is hinged to an upright position, and so is the boom support 164. The tail boom 163 is extended, and is at a raised level to extend well over the deployed propeller 130. The rotor blades 152, 153 have their chord plane directed substantially horizontally.

Figure 3 is a schematic side view showing the mast structure of the vehicle in a first intermediate condition between flying condition and road driving condition. The propeller 130 is folded and stored, and is not visible. The mast 140 is lowered to an angle of about 45° with the horizontal; the boom support 164 and the tail boom 163 have followed. The rotor blades 152, 153 extend in transverse direction with respect to the vehicle, i.e. perpendicular to the plane of drawing.

Figure 4 is a schematic side view showing the vehicle in a second intermediate condition between flying condition and road driving condition. The propeller 130 is folded and stored, and is not visible. The mast 140 is lowered to a substantially horizontal position; the boom support 164 and the tail boom 163 have followed, so that the tail boom 163 now also lies substantially horizontally, close to the top of the vehicle. The rotor blades 152, 153 still extend in transverse direction with respect to the vehicle, i.e. perpendicular to the plane of drawing. The rotor blades 152, 153 are hinged to the rotor hub 151 about respective hinge axes 154, 155 that are substantially parallel to the chord planes of the rotor blades. Figure 4 clearly shows that these hinge axes, commonly indicated by a dashed line, are now directed vertically.

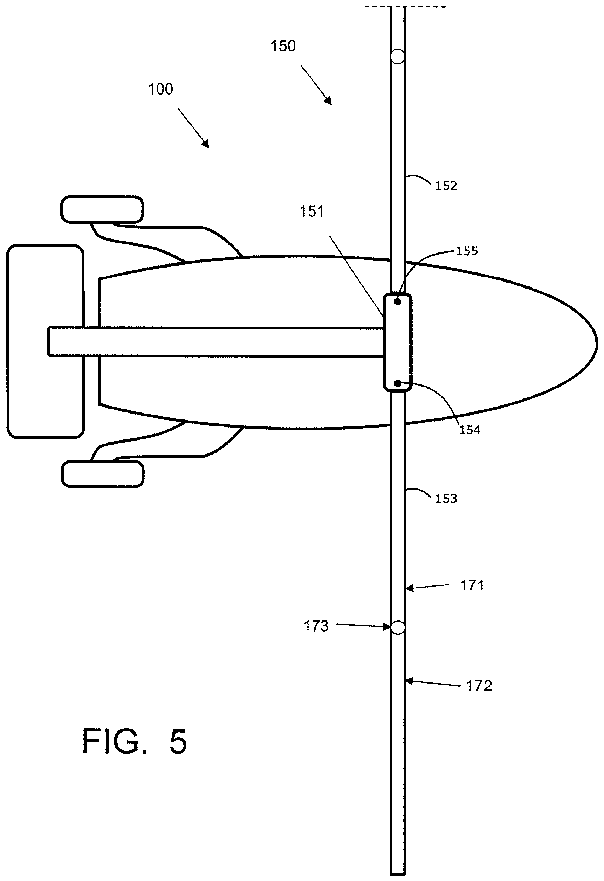

Figure 5 is a schematic top view of the vehicle in this second intermediate condition. Said hinge axes 154, 155 extend perpendicular to the plane of this drawing. The figure clearly shows that the rotor blades 152, 153 have a length substantially larger than the length of the vehicle body 110. According to the present invention, each rotor blade 152, 153 consists of two rotor blade segments 171, 172 hinged together at a hinge segment 173, as will be explained in more detail later. The two rotor blade segments 171, 172 have substantially equal length, although this is not essential to the invention. Further, it may be advantageous if the distal segment 172 is slightly shorter than the proximal segment 171.

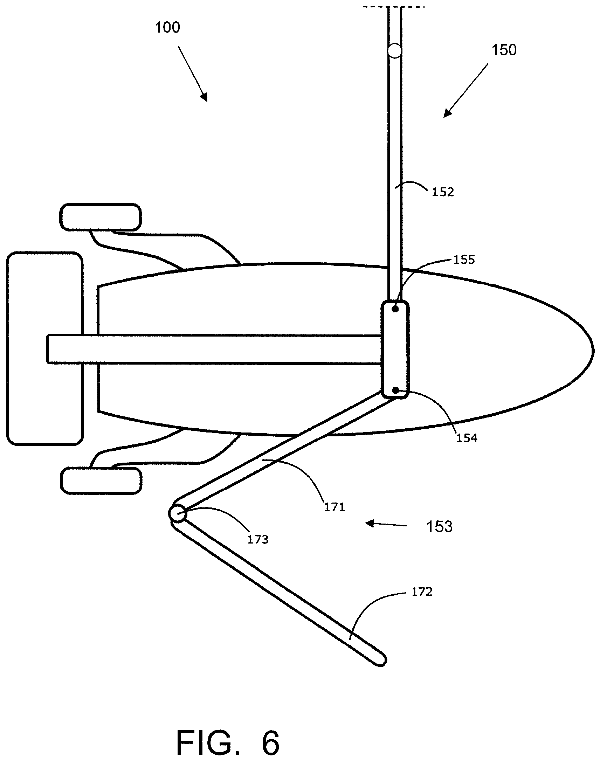

Figure 6 is a schematic top view of the vehicle in a third intermediate condition. As compared to the second intermediate condition of figure 5, one of the rotor blades 153 has (manually) been hinged towards the rear of the vehicle body 110, over an angle of about 60°, it being noted that the precise value of this angle is without relevance. Further, the distal segment 172 has been hinged forward with respect to the proximal segment 171, such as to "fold" this rotor blade. It is noted that it is possible that first the proximal segment 171 is hinged to the rear and that subsequently the distal segment 172 is folded forward with respect to the proximal segment 171, but it is also possible to first fold the distal segment 172 forward with respect to the proximal segment 171 and to subsequently hinge the folded blade 153 to the rear. It is also possible to do both hinging and folding actions simultaneously.

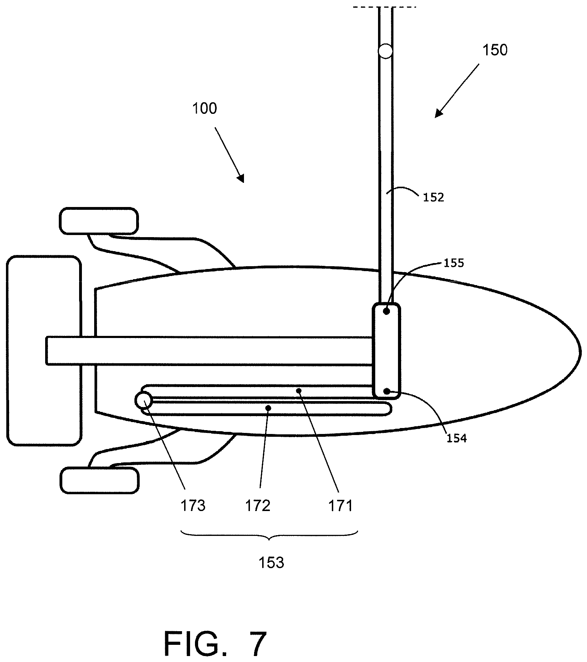

Figure 7 is a top view comparable to figure 6, showing the righthand rotor blade 153 of the vehicle 100 in road travel condition. The distal segment 172 has been hinged forward with respect to the proximal segment 171 over 180°, and lies parallel to the corresponding proximal segment 171. In turn, the proximal segment 171 has been hinged rearward further, and now extends substantially parallel, in longitudinal direction of the vehicle, parallel to the mast 140. The hinge segment 173 is located at the rear end of the vehicle body 110, without necessarily extending beyond the rear. When both rotor blades 152 and 153 have been folded in this way, with the mast 140 in-between, the tail has a width wider than the vehicle body 110, and wider than the rotor blades in this folded condition, so that the tail boom 163 can be pushed in so that the tail foils take a position adjacent the vehicle body and adjacent the folded rotor blades, at the outside thereof, as shown. The vehicle as a whole is now nicely compact, suitable for being used as a "normal" car.

An important aspect of the present invention concerns the design of the hinge segment 173 in each rotor blade. In the following, a hinge structure for such hinge segment will generally be indicated by reference numeral 200. An objective of the invention is to provide a hinge design such that, in the stretched condition of the rotor blade 152, 153, the blade segments 171, 172 together with the hinge segment 173 provide an aerodynamically continuous outer blade surface, without interruptions, recesses or projections that could interfere with air flow and thus increase drag and reduce efficiency.

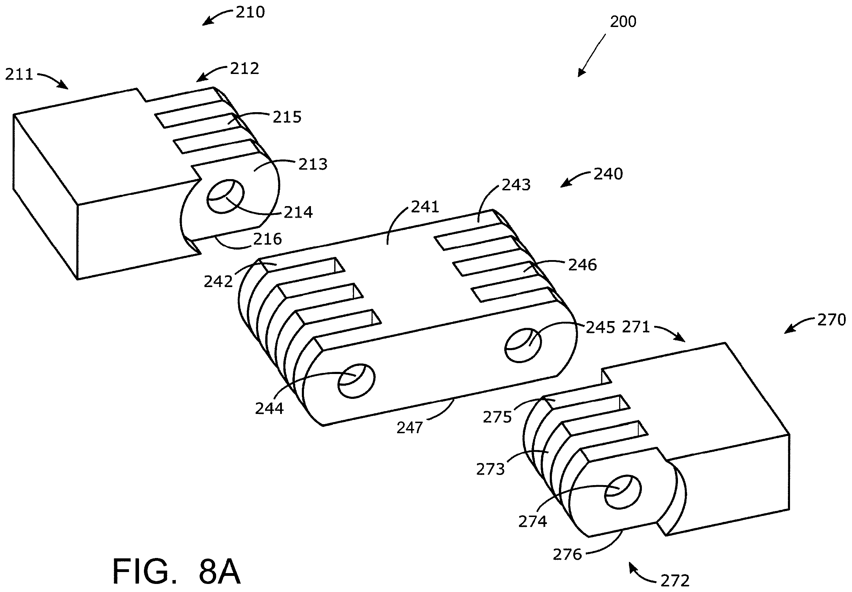

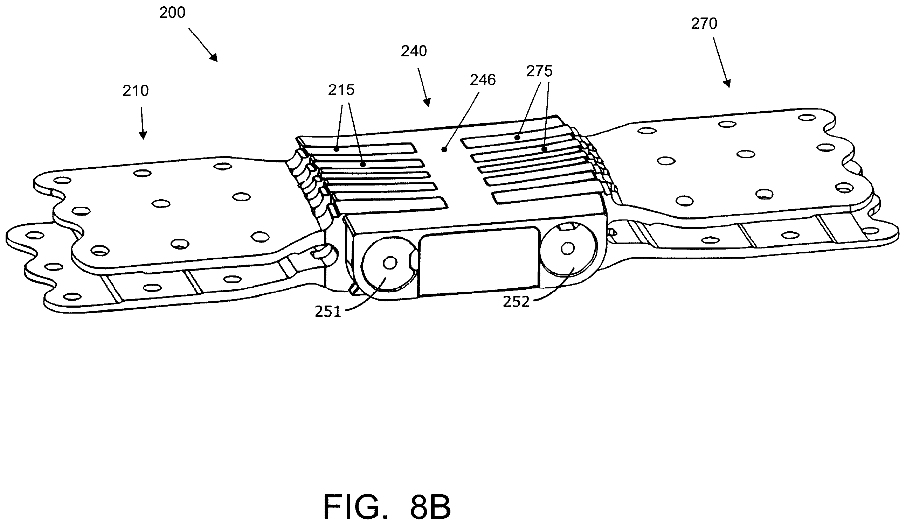

Figures 8A and 8B are perspective views illustrating the main components of an embodiment of a hinge structure 200 according to the present invention. Figure 8A shows schematic representations of these components in taken apart condition, while figure 8B shows a more realistic view of these components in assembled condition.

The hinge structure 200 comprises a first blade connector 210, a central hinge element 240, and a second blade connector 270.

The central hinge element 240 has a central body 241, a first set of mutually parallel coupling flanges 242 extending away from the central body 241 in a first direction, and a second set of mutually parallel coupling flanges 243 extending away from the central body 241 in an opposite second direction. A first cylindrical hole 244 extends perpendicular through the first flanges 242, a second cylindrical hole 245 extends perpendicular through the second flanges 243. It is noted that the number of coupling flanges is not particularly relevant to the invention, and in fact a hinge with only one coupling flange per direction is also possible.

The first blade connector 210 comprises a blade attachment portion 211 and a hinge portion 212. The blade attachment portion 211 is designed to allow a first blade segment to be attached thereto; the precise shape will be designed in conjunction with the corresponding blade segment. The hinge portion 212 comprises a set of mutually parallel coupling flanges 213 attached to the attachment portion 211, either directly or through an intermediate body part. A cylindrical hole 214 extends perpendicular through the coupling flanges 213. Again, the number of coupling flanges here is not particularly relevant to the invention, and this number may again be as low as one.

The second blade connector 270 has a design comparable to, and possibly even identical to, the first blade connector 210. It comprises a blade attachment portion 271 and a hinge portion 272 with a set of mutually parallel coupling flanges 273 attached to the attachment portion 271, and a cylindrical hole 274 extending perpendicular through the coupling flanges 273.

The flanges 242, 243, 213, 273 have mutually parallel side surfaces extending perpendicular to the axes of the cylindrical holes 214, 244, 245, 275. The flanges match together, i.e. the width of the flanges 213, 273 of the blade connectors 210, 270 corresponds to the distances between the flanges 242, 243 of the central hinge element 240, and conversely the width of the flanges 242, 243 of the central hinge element 240 corresponds to the distances between the flanges 213, 273 of the blade connectors 210, 270.

In the assembled condition (figure 8B), said flanges are positioned in mutually engaged position, with the flanges 213, 273 of the blade connectors 210, 270 positioned in between the flanges 242, 243 of the central hinge element 240, and with the flanges 242, 243 of the central hinge element 240 positioned in between the flanges 213, 273 of the blade connectors 210, 270, the respective holes 214, 244 and 274, 245 being aligned with each other. A first cylindrical hinge axle 251 is pushed into the aligned holes 214, 244, while a second cylindrical hinge axle 252 is pushed into the aligned holes 274, 245. It should be clear that now the first blade connector 210 can hinge with respect to the central hinge element 240 about the first cylindrical hinge axle 251, and that the second blade connector 270 can hinge with respect to the central hinge element 240 about the second cylindrical hinge axle 252.

An important feature of the hinge structure 200 according to the present invention can be seen in figure 8B. The central hinge element 240 has an upper surface 246 that is common for the central body 241 and for all flanges 242, 243. The flanges 213 of the first blade connector 210 have flush upper surfaces 215, and the flanges 273 of the second blade connector 270 have flush upper surfaces 275. In the extended condition of the hinge structure 200, the flanges 213 of the first blade connector 210 extend to the central body 241 of the central hinge element 240 without any gaps and the flanges 273 of the second blade connector 270 extend to the central body 241 of the central hinge element 240 without any gaps. The upper surface 246 of the central hinge element 240 is flush and contiguous with the upper surfaces 215 of the flanges 213 of the first blade connector 210 and flush and contiguous with the upper surfaces 275 of the flanges 273 of the second blade connector 270.

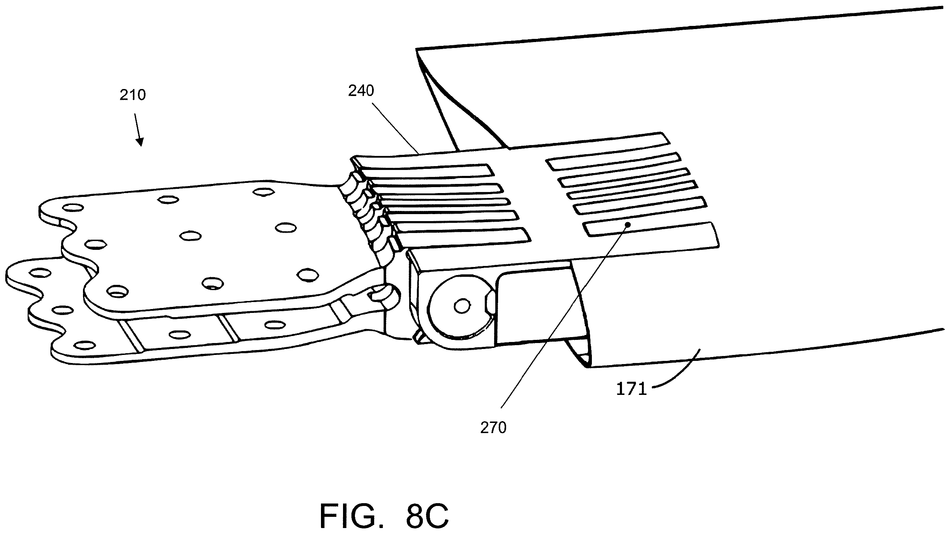

Figure 8C is a view comparable to figure 8B, with one blade segment (for instance 171) attached to the second blade connector 270. The outer skin of the blade segment 171 is completely flush with the flanges 273 of the second blade connector 270. The same applies to the other blade segment attached to the first blade connector 210, but this is not shown separately. It can be seen that, in forward and rearward direction, i.e. in the direction parallel to the hinge axles, the blade segment 171 extends beyond the contour of the hinge, and at these locations the blade segment extends further in longitudinal direction such that, in the extended state, the end portions of the two blade segments touch each other, or approach each other as close as possible, to obtain a near seamless transition between the two blade segments.

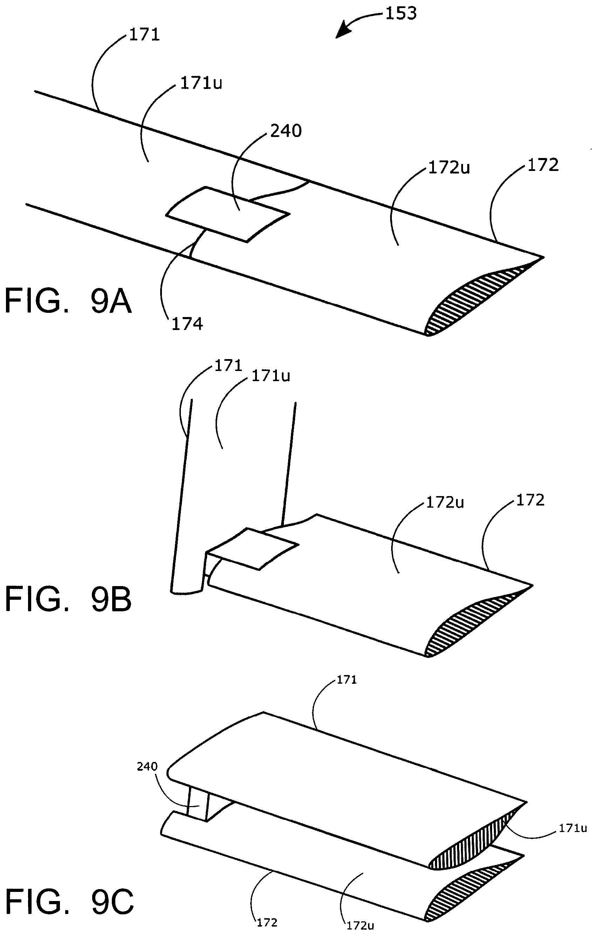

It should be clear that, in the extended state of the hinge, the two blade segments 171, 172 together with the hinge structure 200 define a seamless and flush upper blade surface, without interruptions. This is also illustrated schematically in figure 9A. At the underside, the outer skins of the blade segments 171 and 172 join each other in flush manner, so that the precise shape of the lower surfaces of the blade connectors and central hinge element is not particularly relevant.

Figure 9A is a schematic perspective view of the central hinge portion of one rotor blade, showing the central hinge element 240 and the two blade segments 171, 172 with a single seam 174 where they touch.

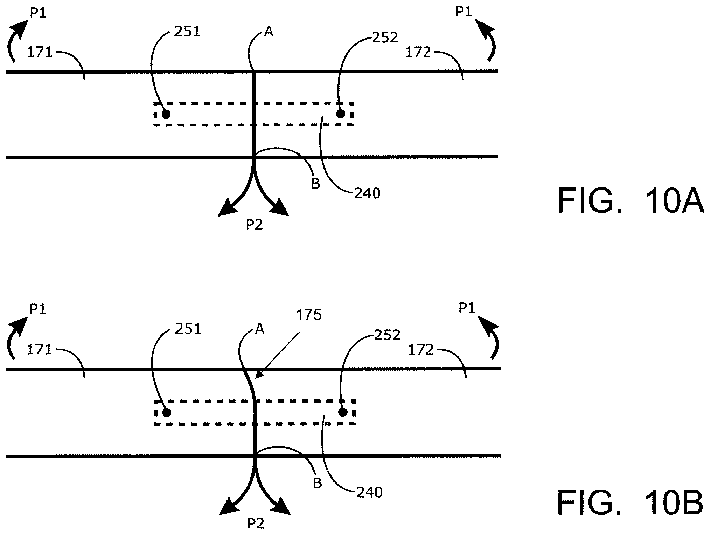

Given the fact that the hinge structure 200 has two hinge axes arranged parallel at some distance from each other, with the two blade segments 171, 172 meeting each other at a position in between those two axes, the two blade segments 171, 172 must not be made to hinge simultaneously otherwise they would interfere with each other. This is schematically illustrated in figure 10A. The two blade segments 171, 172 meet each other at an upper point A above a hinge plane defined by the hinge axes 251, 152, and at a lower point B below said plane. Assume that the two blade segments 171, 172 are folded in upward direction, indicated by arrows P1. It will easily be seen that at the lower point B the two blade segments 171, 172 will move away from each other, as indicated by arrows P2, but that at upper point A the two blade segments 171, 172 will (try to) move towards each other.

To avoid this, the present invention provides that the end portions of the two blade segments 171, 172 facing each other, i.e. the proximal end of the distal blade segment 172 and the distal end of the proximal blade segment 171, are shaped so that one allows hinging of the other without interference, as schematically illustrated in figure 10B. Particularly, above said hinge plane, the end portions of the two blade segments 171, 172 may have a contour that follows a cylindrical shape around the first hinge axis 251, as indicated at 175. It will now be seen that the second blade segment 172 can not hinge, but the first blade segment 171 can be hinged up without interfering with the second blade segment 172 - see figure 9B. After this hinging has been completed, the second blade segment 172 can be hinged up without interfering with the first blade segment 171 - see figure 9C.

For hinging in the opposite direction, i.e. deploying, the hinging order should be opposite.

Figures 9A-C schematically show the rotor blade 153 in an orientation of normal operation, i.e. with the chord 14 substantially horizontal. It can be seen that, after folding, the upper surfaces 171u, 172u of the blade segments 171, 172 are facing each other (figure 9C), while in the extended condition said upper surfaces 171u, 172u are flush with each other and the intermediate central hinge element 240 (figure 9A). With reference to figures 4-5-6-7 it is noted that, in reality, in the folding condition the blade has rotated over about 90° so that the chord 14 is substantially vertical.

From the above, it follows that the two blade segments 171, 172 should be folded and deployed in a correct folding order. It is preferred that the order of folding is not left to the skills of the user, but that the hinge structure 200 is provided with safety features that ensure the correct folding order without the user having to consider.

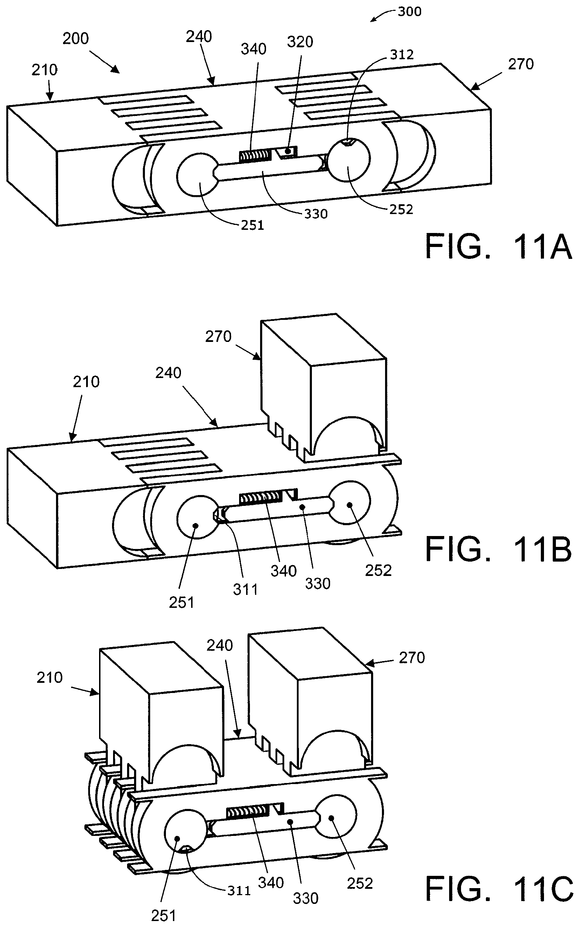

Figures 11A-C schematically illustrate the operational principles of an embodiment of a preferential folding control arrangement 300 according to the present invention. The first hinge axle 251 is provided with a first recess 311, and the second hinge axle 252 is provided with a second recess 312. The central hinge element 240 is provided with a lock pin 330, axially slideable in a chamber 320 of the central hinge element 240, positioned between the two hinge axles 251, 252, and having a length larger than the mutual distance between the two hinge axles 251, 252.

The angular position of the first recess 311 with respect to the first hinge axle 251 is such that this recess is aligned with a first end of the lock pin 330 when the first blade connector 210 is in the extended condition. The angular position of the second recess 312 with respect to the second hinge axle 252 is such that this recess is aligned with an opposite second end of the lock pin 330 when the second blade connector 270 is in the folded condition.

Figure 11A illustrates the hinge structure 200 in the fully extended condition, i.e. the flying condition. The first end of the lock pin 330 extends into the first recess 311, such that the first hinge axle 251, which is attached to the first blade connector 210, is prevented from rotating with respect to the central hinge element 240. The opposite second end of the lock pin 330 abuts the outer surface of the second hinge axle 252, such that the lock pin 300 is prevented from releasing the first hinge axle 251. The second blade connector 270 is free to hinge up.

When the second blade connector 270 reaches its folded condition, the second recess 312 comes into alignment with the lock pin 330. The lock pin 330 is now shifted, with its second end entering the second recess 312 to lock the second blade connector 270 against folding. This condition is illustrated in figure 11B.

When the first end of the lock pin 330 has completely left the first recess 311, the first blade connector 210 is free to hinge up - see figure 11C.

It is noted that the user only needs to take hold of the outer blade segment and push it in the folding direction. In a first hinging stage (typically for the first 90° of hinging), hinging will take place with respect to the second hinge axle 252 as active hinge, after which the first hinge axle 251 automatically becomes the active hinge in a subsequent second hinging stage. In this respect, it does not really matter whether the outer or the inner blade segment is the first to hinge with respect to the central hinge element 240.

For hinging in the opposite direction, for employing the folded blade, the user again only needs to take hold of the outer blade segment and push it in the employment direction. At first, the first hinge axle 251 automatically is the active hinge, so that the first blade connector 210 employs to its extended state - going from figure 11C to figure 11B. When the first blade connector 210 reaches its extended state, defined by a stop not shown for sake of simplicity, the second hinge axle 252 becomes active after shifting of the lock pin.

It is possible that shifting the lock pin 330 requires a user action. To assist the user, the folding control arrangement 300 may comprise a bias member 340, for instance a spring, arranged in the chamber 320 or at another suitable position, exerting a bias force on the lock pin 330 for pressing the lock pin 330 towards the second hinge axle 252. Alternatively or additionally, in a preferred embodiment, the second end of the lock pin 330 has a bevelled edge, as does the second recess 312, so that exerting some force on the second blade connector 270 will force the second end of the lock pin 330 out of the second recess 312 while at the same time the first end of the lock pin 330 enters the first recess 311, and the second blade connector 270 can hinge further - going from figure 11B to figure 11A. Similarly, in a preferred embodiment, the first end of the lock pin 330 has a bevelled edge, as does the first recess 311, forcing the first end of the lock pin 330 out of the first recess 311 at the end of the folding operation from the position in figure 11A to the position in figure 11B; in such case, the bias spring can be dispensed with.

It is possible that the extended, deployed state of the hinge structure 200 is defined and secured by a first pin-in-hole arrangement for defining the extended position of the first blade connector 210 with respect to the central hinge element 240, and by a second pin-in-hole arrangement for defining the extended position of the second blade connector 270 with respect to the central hinge element 240, respectively. This would mean that, before the user is able to fold a blade, he would have to remove these two pins, and after deploying the blade he would need to place these pins. In a further elaboration of the present invention, such securing arrangement is not needed, in that the extended, deployed state of the hinge structure 200 is defined by stops, of which the precise design and position is not essential. Such stop may be arranged on the central hinge element, or on a blade connector, or both. A first such stop defines the extended position of the first blade connector 210 with respect to the central hinge element 240, and a second such stop defines the extended position of the second blade connector 270 with respect to the central hinge element 240. For the user, this has an advantage in that he can start folding the blade without first needing to remove a pin, and he can deploy the blade until it reaches the stop(s) without then needing to place any pin. Such pin-in-hole arrangement is not needed for keeping the blades deployed in the operative situation, because forces on the blades are such as to keep them extended automatically.

It is noted that, in an embodiment with the folding control arrangement 300, one of the above-mentioned stops can be dispensed with.

Summarizing, a foldable rotor blade comprises a hinge element defining two hinge axes arranged in parallel, and two blade segments each coupled to the hinge element for hinging with respect to a respective one of said hinge axes. The rotor blade has an extended condition in which the blade segments are substantially aligned with each other; the rotor blade has a folded condition in which each blade segment is hinged with respect to the hinge element so that the blade segments are substantially parallel to each other. The blade has a cord and said hinge axes are substantially parallel to the chord. The blade segments have upper surfaces which in the folded condition are facing each other, and which in the extended condition are flush with each other and the intermediate hinge element.

It should be clear to a person skilled in the art that the present invention is not limited to the exemplary embodiments discussed above, but that several variations and modifications are possible within the protective scope of the invention as defined in the appending claims. For instance, the inventive hinge structure can also be applied to fixed wing airplanes. Further, instead of a hinge structure 200 with blade connectors to be attached to blade segments, it is also possible that a blade connector is integrated with a blade segment, i.e. that the blade segment is provided with a hinge portion such as 212 or 272.

Even if certain features are recited in different dependent claims, the present invention also relates to an embodiment comprising these features in common. Even if certain features have been described in combination with each other, the present invention also relates to an embodiment in which one or more of these features are omitted. Features which have not been explicitly described as being essential may also be omitted, as long as they do not belong to independent claims. Any reference signs in a claim should not be construed as limiting the scope of that claim.

## Claims

1. Vehicle (100) with a lift rotor (150) having foldable rotor blades (152, 153), wherein the number of rotor blades is equal to two, each rotor blade :
comprising a hinge element (173; 240) defining two hinge axes arranged in parallel, and two blade segments (171, 172) each coupled to the hinge element (173; 240) for hinging with respect to a respective one of said hinge axes;
wherein the rotor blade has an extended condition in which the blade segments are substantially aligned with each other;
and wherein the rotor blade has a folded condition in which each blade segment is hinged with respect to the hinge element so that the blade segments are substantially parallel to each other;
wherein the blade has a chord (14) and wherein said hinge axes are substantially parallel to the chord (14);
wherein the hinge element (240) has
- a central body (241);
- at least one first coupling flange (242) extending away from the centra! body (241) in a first direction, with a first cylindrical hole (244) extending perpendicular through the first flange (242);
- at least one second coupling flange (243) extending away from the central body (241) in an opposite second direction, with a second cylindrical hole (245) extending perpendicular through the second flange (243);
wherein a first one of said blade segments (171) has at one end a hinge portion (212) comprising at least one coupling flange (213) and a cylindrical hole (214) extending perpendicular through the coupling flanges (213);
wherein a second one of said blade segments (172) has at one end a hinge portion (272) comprising at least one coupling flange (273) and a cylindrical hole (274) extending perpendicular through the coupling flange (273);
and wherein the rotor blade further comprises
- a first cylindrical hinge axle (251) arranged in the aligned holes (214, 244) of the first blade segment (171) and the hinge element (240), respectively;
and
- a second cylindrical hinge axle (252) arranged the aligned holes (274, 245) of the second blade segment (172) and the hinge element (240), respectively;
the vehicle having a vehicle body (110) and a mast (140) hinged to the vehicle body (110);
wherein the lift rotor (150) comprises a rotor hub (151) mounted at a top end (142) of the mast (140), such that the rotation axis of the hub is fixed with respect to the mast ;
and wherein each foldable rotor blade has its proximal blade segment (171) hinged to the rotor hub, wherein a hub hinge axis (154, 155) between the hub (151) and the proximal blade segment (171) is substantially parallel to the chord (14) of the rotor blade;
wherein the rotor blades have a length larger than the length of the vehicle body (110);
wherein the vehicle has a flying condition in which:
- the mast is in an upright position,
- the two rotor blades have their chord plane directed horizontally;
and wherein the vehicle has a compact condition for road travel in which:
- the mast (140) is lowered to a horizontal position,
- the rotation axis of the hub (151) is directed horizontally;
- the proximal blade segment (171) extends parallel to the mast (140) from the hub (151) to the rear end of the vehicle body (110),
- the hub hinge axis (154, 155) extends vertically,
- the chord (14) of the rotor blade is directed vertically.

2. Vehicle according to claim 1, wherein the extended condition of the rotor blade is defined by at least one stop between the hinge element and at least one of the blade segments.

3. Vehicle according to claim 1 or 2, wherein the blade segments (171, 172) have upper surfaces (171u, 172u) which in the folded condition are facing each other, and which in the extended condition are flush with each other and the intermediate hinge element (240).

4. Vehicle according to any of previous claims 1-3, further comprising a preferential folding control arrangement (300) to ensure a preferred hinging order of the first blade segment (171) and the second blade segment (172).

5. Vehicle according to claim 4, wherein the preferential folding control arrangement (300) has a first locking condition in which it locks the first blade segment (171) in its extended condition with respect to the hinge element (240) and allows hinging of the second blade segment (172).

6. Vehicle according to claim 4 or 5, wherein the preferential folding control arrangement (300) has a second locking condition in which it locks the second blade segment (172) its folded condition with respect to the hinge element (240) and allows hinging of the first blade segment (171).

7. Vehicle according to any of claims 4-6, wherein the hinge element (240) has an axially displaceable locking pen (330) having a first end and an opposite second end, wherein either said first end engages the first blade segment (171) to lock it or the second end engages the second blade segment (172) to lock it.

8. Vehicle according to claim 7, wherein said first end and said second end each have a bevelled edge.

9. Vehicle according to claim 7 or 8, further comprising a bias member (340), arranged tor exerting a bias force on the lock pin (330).

10. Vehicle according to any of the previous claims, wherein the vehicle is a convertible vehicle having a flying condition and a road traffic condition;
wherein in the flying condition the mast (140) is standing upright and the rotor blades are in their extended condition and are directed away from the rotor hub (151) in opposite directions; and
wherein in the road traffic condition the mast (140) is hinged down to a substantially horizontal direction, and wherein each foldable rotor blade is in its folded condition with its proximal blade segment (171) hinged towards the mast (140).

11. Method for converting the vehicle according to any of the previous claims from the flying condition to the road traffic condition, the method comprising the steps of:
- positioning the rotor blades to extend in transverse direction with respect to the vehicle;
- hinging the mast forward from a substantial vertical orientation to a substantial horizontal orientation, so that respective hinge axes of the rotor blades are directed substantially vertical;
- folding the rotor blades about the respective hinge axes with respect to each other and with respect to the hub, so that the proximal blade segments are directed from the hub to the rear of the vehicle and the distal blade segments are directed forward, to eventually reach a position in which the blade segments are directed parallel to each other, in longitudinal direction of the vehicle, parallel to the mast;
in this order.

12. Vehicle according to any of the previous claims 1-10, wherein the vehicle is adapted to be converted from the flying condition to the road traffic condition by the method of claim 11.

## Patentansprüche

1. Fahrzeug (100) mit einem Hubrotor (150), der faltbare Rotorblätter (152, 153) aufweist, wobei die Anzahl der Rotorblätter gleich zwei ist und jedes Rotorblatt:
ein Scharnierelement (173; 240), das zwei parallel angeordnete Scharnierachsen definiert, und zwei Blattsegmente (171, 172) umfasst, die jeweils mit dem Scharnierelement (173; 240) gekoppelt sind, um sich in Bezug auf eine jeweilige der Scharnierachsen zu schwenken;
wobei das Rotorblatt einen ausgefahrenen Zustand aufweist, in dem die Blattsegmente im Wesentlichen miteinander ausgerichtet sind;
und wobei das Rotorblatt einen gefalteten Zustand aufweist, in dem jedes Blattsegment in Bezug auf das Scharnierelement so angelenkt ist, dass die Blattsegmente im Wesentlichen parallel zueinander sind;
wobei das Blatt eine Sehne (14) aufweist und wobei die Scharnierachsen im Wesentlichen parallel zu der Sehne (14) sind;
wobei das Scharnierelement (240) Folgendes aufweist
- einen zentralen Körper (241);
- - mindestens einen ersten Kupplungsflansch (242), der sich von dem zentralen Körper (241) in einer ersten Richtung weg erstreckt, wobei sich ein erstes zylindrisches Loch (244) senkrecht durch den ersten Flansch (242) erstreckt;
- - mindestens einen zweiten Kupplungsflansch (243), der sich von dem zentralen Körper (241) in einer entgegengesetzten zweiten Richtung weg erstreckt, wobei sich ein zweites zylindrisches Loch (245) senkrecht durch den zweiten Flansch (243) erstreckt;
wobei ein erstes der Blattsegmente (171) an einem Ende einen Scharnierabschnitt (212) aufweist, der mindestens einen Kupplungsflansch (213) und ein zylindrisches Loch (214) umfasst, das sich senkrecht durch die Kupplungsflansche (213) erstreckt;
wobei ein zweites der Blattsegmente (172) an einem Ende einen Scharnierabschnitt (272) aufweist, der mindestens einen Kupplungsflansch (273) und ein zylindrisches Loch (274) umfasst, das sich senkrecht durch den Kupplungsflansch (273) erstreckt;
und wobei das Rotorblatt ferner Folgendes umfasst
- eine erste zylindrische Scharnierachse (251), die jeweils in den ausgerichteten Löchern (214, 244) des ersten Blattsegments (171) und des Scharnierelements (240) angeordnet ist;
und
- eine zweite zylindrische Scharnierachse (252), die jeweils in den ausgerichteten Löchern (274, 245) des zweiten Blattsegments (172) und des Scharnierelements (240) angeordnet ist;
wobei das Fahrzeug eine Fahrzeugkarosserie (110) und einen an der Fahrzeugkarosserie (110) angelenkten Mast (140) aufweist;
wobei der Hubrotor (150) eine Rotornabe (151) umfasst, die an einem oberen Ende (142) des Mastes (140) montiert ist, sodass die Drehachse der Nabe in Bezug auf den Mast fixiert ist;
und wobei jedes faltbare Rotorblatt mit seinem proximalen Blattsegment (171) an der Rotornabe angelenkt ist, wobei eine Nabenscharnierachse (154, 155) zwischen der Nabe (151) und dem proximalen Blattsegment (171) im Wesentlichen parallel zu der Sehne (14) des Rotorblatts verläuft;
wobei die Rotorblätter eine Länge aufweisen, die größer ist als die Länge der Fahrzeugkarosserie (110);
wobei das Fahrzeug einen Flugzustand aufweist, in dem:
- der Mast in einer aufrechten Position ist,
- die beiden Rotorblätter ihre Sehnenebene horizontal ausgerichtet haben; und wobei das Fahrzeug einen Kompaktzustand für den Straßenverkehr aufweist, in dem:
- der Mast (140) in eine horizontale Position abgesenkt ist,
- die Drehachse der Nabe (151) horizontal ausgerichtet ist;
- das proximale Blattsegment (171) sich parallel zu dem Mast (140) von der Nabe (151) zu dem hinteren Ende des Fahrzeugkörpers (110) erstreckt,
- die Nabenscharnierachse (154, 155) vertikal verläuft,
- die Sehne (14) des Rotorblatts vertikal ausgerichtet ist.

2. Fahrzeug nach Anspruch 1, wobei der ausgefahrene Zustand des Rotorblatts durch mindestens einen Anschlag zwischen dem Scharnierelement und mindestens einem der Blattsegmente definiert ist.

3. Fahrzeug nach Anspruch 1 oder 2, wobei die Blattsegmente (171, 172) Oberseiten (171u, 172u) aufweisen, die in dem gefalteten Zustand einander zugewandt sind und die in dem ausgefahrenen Zustand bündig miteinander und mit dem mittleren Scharnierelement (240) sind.

4. Fahrzeug nach einem der vorstehenden Ansprüche 1 bis 3, ferner umfassend eine bevorzugte Faltsteuerungsanordnung (300), um eine bevorzugte Scharnierreihenfolge des ersten Blattsegments (171) und des zweiten Blattsegments (172) sicherzustellen.

5. Fahrzeug nach Anspruch 4, wobei die bevorzugte Faltsteuerungsanordnung (300) einen ersten Verriegelungszustand aufweist, in dem sie das erste Blattsegment (171) in seinem ausgefahrenen Zustand in Bezug auf das Scharnierelement (240) verriegelt und das Schwenken des zweiten Blattsegments (172) ermöglicht.

6. Fahrzeug nach Anspruch 4 oder 5, wobei die bevorzugte Faltsteuerungsanordnung (300) einen zweiten Verriegelungszustand aufweist, in dem sie das zweite Blattsegment (172) in seinem gefalteten Zustand in Bezug auf das Scharnierelement (240) verriegelt und das Schwenken des ersten Blattsegments (171) ermöglicht.

7. Fahrzeug nach einem der Ansprüche 4 bis 6, wobei das Scharnierelement (240) einen axial verschiebbaren Verriegelungsstift (330) mit einem ersten Ende und einem gegenüberliegenden zweiten Ende aufweist, wobei entweder das erste Ende in das erste Blattsegment (171) eingreift, um es zu verriegeln, oder das zweite Ende in das zweite Blattsegment (172) eingreift, um es zu verriegeln.

8. Fahrzeug nach Anspruch 7, wobei das erste Ende und das zweite Ende jeweils einen abgeschrägten Rand aufweisen.

9. Fahrzeug nach Anspruch 7 oder 8, ferner umfassend ein Vorspannelement (340), das angeordnet ist, um eine Vorspannkraft auf den Verriegelungsstift (330) auszuüben.

10. Fahrzeug nach einem der vorstehenden Ansprüche, wobei das Fahrzeug ein umwandelbares Fahrzeug mit einem Flugzustand und einem Straßenverkehrszustand ist;
wobei in dem Flugzustand der Mast (140) aufrecht steht und die Rotorblätter in ihrem ausgefahrenen Zustand sind und in entgegengesetzte Richtungen von der Rotornabe (151) weg gerichtet sind; und
wobei in dem Straßenverkehrszustand der Mast (140) in eine im Wesentlichen horizontale Richtung abgeklappt ist und wobei jedes faltbare Rotorblatt in seinem gefalteten Zustand mit seinem proximalen Blattsegment (171) in Richtung des Mastes (140) abgeklappt ist.

11. Verfahren zum Umwandeln des Fahrzeugs nach einem der vorstehenden Ansprüche von dem Flugzustand in den Straßenverkehrszustand, wobei das Verfahren die folgenden Schritte umfasst:
- Positionieren der Rotorblätter, sodass sie sich in Querrichtung in Bezug auf das Fahrzeug erstrecken;
- Schwenken des Mastes nach vorne von einer im Wesentlichen vertikalen Ausrichtung in eine im Wesentlichen horizontale Ausrichtung, sodass die jeweiligen Scharnierachsen der Rotorblätter im Wesentlichen vertikal ausgerichtet sind;
- Falten der Rotorblätter um die jeweiligen Scharnierachsen relativ zueinander und in Bezug auf die Nabe, sodass die proximalen Blattsegmente von der Nabe zu der Rückseite des Fahrzeugs und die distalen Blattsegmente nach vorne gerichtet sind, um schließlich eine Position zu erreichen, in der die Blattsegmente parallel zueinander in Längsrichtung des Fahrzeugs und parallel zu dem Mast gerichtet sind;
in dieser Reihenfolge.

12. Fahrzeug nach einem der vorstehenden Ansprüche 1 bis 10, wobei das Fahrzeug angepasst ist, um durch das Verfahren nach Anspruch 11 von dem Flugzustand in den Straßenverkehrszustand umgewandelt zu werden.

## Revendications

1. Véhicule (100) doté d'un rotor de levage (150) présentant des pales de rotor pliables (152, 153), dans lequel le nombre de pales de rotor est égal à deux, chaque pale de rotor :
comprenant un élément d'articulation (173 ; 240) définissant deux axes d'articulation agencés en parallèle, et deux segments de pale (171, 172) chacun couplé à l'élément d'articulation (173 ; 240) pour s'articuler par rapport à l'un respectif desdits axes d'articulation ;
dans lequel la pale de rotor présente un état déployé dans lequel les segments de pale sont sensiblement alignés l'un par rapport à l'autre ;
et dans lequel la pale de rotor présente un état plié, dans lequel chaque segment de pale étant articulé par rapport à l'élément d'articulation de sorte que les segments de pale soient sensiblement parallèles l'un à l'autre ;
dans lequel la pale présente une corde (14) et dans lequel les axes d'articulation sont sensiblement parallèles à la corde (14) ;
dans lequel l'élément d'articulation (240) présente
- un corps central (241) ;
- au moins une première bride de couplage (242) s'étendant à l'écart du corps central (241) dans une première direction, un premier trou cylindrique (244) s'étendant perpendiculairement à travers la première bride (242) ;
- au moins une seconde bride de couplage (243) s'étendant à l'écart du corps central (241) dans une seconde direction opposée, un second trou cylindrique (245) s'étendant perpendiculairement à travers la seconde bride (243) ;
dans lequel un premier desdits segments de pale (171) présente, sur une extrémité, une partie d'articulation (212) comprenant au moins une bride de couplage (213) et un trou cylindrique (214) s'étendant perpendiculairement à travers les brides de couplage (213) ;
dans lequel un second desdits segments de pale (172) présente, sur une extrémité, une partie d'articulation (272) comprenant au moins une bride de couplage (273) et un trou cylindrique (274) s'étendant perpendiculairement à travers la bride de couplage (273) ;
et dans lequel la pale de rotor comprend en outre
- un premier axe d'articulation cylindrique (251) agencé dans les trous alignés (214, 244) du premier segment de pale (171) et de l'élément d'articulation (240), respectivement ;
et
- un second axe d'articulation cylindrique (252) agencé dans les trous alignés (274, 245) du second segment de pale (172) et de l'élément d'articulation (240), respectivement ;
le véhicule présentant une carrosserie (110) de véhicule et un mât (140) articulé sur la carrosserie (110) de véhicule ;
dans lequel le rotor de levage (150) comprend un moyeu de rotor (151) monté à l'extrémité supérieure (142) du mât (140), de sorte que l'axe de rotation du moyeu soit fixe par rapport au mât ;
et dans lequel chaque pale de rotor pliable présente son segment de pale proximal (171) articulé sur le moyeu de rotor, dans lequel un axe d'articulation de moyeu (154, 155) entre le moyeu (151) et le segment de pale proximal (171) est sensiblement parallèle à la corde (14) de la pale de rotor ;
dans lequel les pales de rotor présentent une longueur supérieure à la longueur de la carrosserie (110) de véhicule ;
dans lequel le véhicule présente un état de vol dans lequel :
- le mât est en position verticale,
- les deux pales de rotor présentent leur plan de corde orienté horizontalement ;
et dans lequel le véhicule présente un état compact pour le déplacement sur route dans lequel :
- le mât (140) est abaissé en position horizontale,
- l'axe de rotation du moyeu (151) est orienté horizontalement ;
- le segment de pale proximal (171) s'étend parallèlement au mât (140) du moyeu (151) à l'extrémité arrière de la carrosserie (110) de véhicule,
- l'axe d'articulation de moyeu (154, 155) s'étend verticalement,
- la corde (14) de la pale de rotor est orientée verticalement.

2. Véhicule selon la revendication 1, dans lequel l'état déployé de la pale de rotor est défini par au moins une butée entre l'élément d'articulation et au moins l'un des segments de pale.

3. Véhicule selon la revendication 1 ou 2, dans lequel les segments de pale (171, 172) présentent des surfaces supérieures (171u, 172u) qui, à l'état plié, se font face et qui, à l'état déployé, sont au même niveau entre elles et par rapport à l'élément d'articulation intermédiaire (240).

4. Véhicule selon l'une quelconque des revendications 1-3 précédentes, comprenant en outre un système de commande de pliage préférentiel (300) pour assurer un ordre d'articulation préférentiel du premier segment de pale (171) et du second segment de pale (172).

5. Véhicule selon la revendication 4, dans lequel le système de commande de pliage préférentiel (300) présente un premier état de verrouillage dans lequel il verrouille le premier segment de pale (171) dans son état déployé par rapport à l'élément d'articulation (240) et permet l'articulation du second segment de pale (172).

6. Véhicule selon la revendication 4 ou 5, dans lequel le système de commande de pliage préférentiel (300) présente un second état de verrouillage dans lequel il verrouille le second segment de pale (172) dans son état plié par rapport à l'élément d'articulation (240) et permet l'articulation du premier segment de pale (171).

7. Véhicule selon l'une quelconque des revendications 4-6, dans lequel l'élément d'articulation (240) présente une goupille de verrouillage (330) déplaçable axialement, présentant une première extrémité et une seconde extrémité opposée, dans lequel soit la première extrémité vient en prise dans le premier segment de pale (171) pour le verrouiller, soit la seconde extrémité vient en prise dans le second segment de pale (172) pour le verrouiller.

8. Véhicule selon la revendication 7, dans lequel ladite première extrémité et ladite seconde extrémité présentent chacune un bord biseauté.

9. Véhicule selon la revendication 7 ou 8, comprenant en outre un élément de sollicitation (340), conçu pour exercer une force de sollicitation sur la goupille de verrouillage (330).

10. Véhicule selon l'une quelconque des revendications précédentes, dans lequel le véhicule est un véhicule convertible présentant un état de vol et un état de circulation sur route ;
dans lequel, dans l'état de vol, le mât (140) est debout et les pales de rotor sont dans leur état déployé et sont orientées à l'écart du moyeu de rotor (151) dans des directions opposées ; et
dans lequel, dans l'état de circulation sur route, le mât (140) est articulé vers le bas dans une direction sensiblement horizontale, et dans lequel chaque pale de rotor pliable est dans son état plié avec son segment de pale proximal (171) articulé vers le mât (140).

11. Procédé de conversion du véhicule selon l'une quelconque des revendications précédentes de l'état de vol à l'état de circulation sur route, le procédé comprenant les étapes suivantes :
- le positionnement des pales de rotor de manière à ce qu'elles s'étendent dans une direction transversale par rapport au véhicule ;
- l'articulation du mât vers l'avant, d'une orientation sensiblement verticale à une orientation sensiblement horizontale, de sorte que les axes d'articulation respectifs des pales de rotor soient orientés sensiblement à la verticale ;
- le pliage des pales de rotor autour des axes d'articulation respectifs les unes par rapport aux autres et par rapport au moyeu, de sorte que les segments de pale proximaux soient dirigés du moyeu à l'arrière du véhicule et que les segments de pale distaux soient dirigés vers l'avant, pour atteindre finalement une position dans laquelle les segments de pale sont dirigés parallèlement l'un à l'autre, dans une direction longitudinale du véhicule, parallèlement au mât ;
dans cet ordre.

12. Véhicule selon l'une quelconque des revendications 1-10 précédentes, dans lequel le véhicule est conçu pour être converti de l'état de vol à l'état de circulation sur route par le procédé de la revendication 11.
